# EUROPEAN PATENT APPLICATION

(11) **EP 4 534 332 A1**
(43) Date of publication of application: **09.04.2025**
(21) Application number: 23815214.4
(22) Date of filing: 30.05.2023
(51) Int. Cl.: B60L 53/16, B62D 25/24, B60L 53/14, E05F 15/73, E05F 15/70

(54) **CONTROL METHOD AND CONTROL SYSTEM FOR VEHICLE CHARGING PORT COVER, AND VEHICLE**

(30) Priority: 31.05.2022 CN 202210615756
(71) Applicant: BYD Company Limited, Shenzhen, Guangdong 518118 (CN)
(72) Inventor: ZHU, Qian, Shenzhen, Guangdong 518118 (CN); LIANG, Wei, Shenzhen, Guangdong 518118 (CN); LIU, Jianjian, Shenzhen, Guangdong 518118 (CN); SONG, Mingzhe, Shenzhen, Guangdong 518118 (CN); MA, Li, Shenzhen, Guangdong 518118 (CN)
(74) Representative: Mathys & Squire
(86) International application number: PCT/CN2023/097154
(87) International publication number: WO 2023/232035

(57) **Abstract**

A control method and control system for a vehicle charging port cover, and a vehicle. The vehicle charging port cover comprises an inner cover (210, 220) and an outer cover (100) located on the outer side of the inner cover. The control method comprises obtaining vehicle environment information; under the condition that the vehicle environment information suggests that a user has a charging intention, generating a control signal; and according to the control signal, controlling the inner cover and the outer cover to be opened.

## Description

The present disclosure claims priority to Chinese Patent Application No. 202210615756.1, filed on May 31, 2022 and entitled "CONTROL METHOD AND CONTROL SYSTEM FOR VEHICLE CHARGING PORT COVER, VEHICLE AND ELECTRONIC EQUIPMENT". The entire content of the above-referenced application is incorporated herein by reference.

### TECHNICAL FIELD

The present disclosure relates to the field of vehicle technologies, and more specifically, to a control method and a control system for a vehicle charging port cover, and a vehicle.

### BACKGROUND

In the related art, a new energy vehicle needs to be charged after running out of power. A charging apparatus is disposed on a new energy vehicle, a charging port is disposed on the charging apparatus, and an inner cover that can close the charging port is disposed on the charging port. An outer cover connected to a vehicle body is further disposed outside the inner cover of the charging port.

In an existing new energy vehicle, a charging port cover needs to be manually opened or a charging port cover is controlled to be opened through related operations. This may cause some inconvenience to a driver.

### SUMMARY

The present disclosure provides a new technical solution for a control method and a control system for a vehicle charging port cover and a vehicle.

According to a first aspect of the present disclosure, a control method for a vehicle charging port cover is provided. The control method comprises The charging port cover includes an inner cover and an outer cover located on the outer side of the inner cover. The control method includes:
Vehicle environment information is obtained.

A control signal is generated under the condition that the vehicle environment information suggests that a user has a charging intention.

According to the control signal, the inner cover and the outer cover are controlled to be opened.

In some embodiments, the vehicle environment information includes view information within a set distance range from a vehicle.

In some embodiments, that a control signal is generated under the condition that the vehicle environment information suggests that a user has a charging intention includes:
the vehicle environment information includes a charging station.

In some embodiments, that a control signal is generated under the condition that the vehicle environment information suggests that a user has a charging intention further includes:
a distance between the charging station and the vehicle is less than or equal to a threshold.

In some embodiments, that a control signal is generated under the condition that the vehicle environment information suggests that a user has a charging intention further includes:
a person is holding a charging connector.

In some embodiments, that a control signal is generated under the condition that the vehicle environment information suggests that a user has a charging intention further includes:
a person walks toward a charging station and takes off a charging connector.

In some embodiments, that a control signal is generated under the condition that the vehicle environment information suggests that a user has a charging intention includes:
a distance from a charging connector to the charging port cover is obtained; and
the control signal is generated under the condition that the distance is less than or equal to a predetermined value.

In some embodiments, the predetermined value includes a first predetermined value, and the control signal includes a first control signal; and
the first control signal is generated under the condition that the distance is less than or equal to the first predetermined value, and opening of the outer cover is controlled according to the first control signal.

In some embodiments, the predetermined value includes a second predetermined value, the control signal includes a second control signal, the second control signal is generated under the condition that the distance is less than or equal to the second predetermined value, and opening of the inner cover is controlled according to the second control signal. The second predetermined value is less than the first predetermined value.

In some embodiments, the inner cover includes a first inner cover configured to cover an alternating current charging port and a second inner cover configured to cover a direct current charging port, the control signal includes a third control signal and a fourth control signal, and the control method includes:
a type of the charging station is obtained;
the third control signal is generated under the condition that the type of the charging station is an alternating current charging station, and opening of the first inner cover is controlled according to the third control signal; and
the fourth control signal is generated under the condition that the type of the charging station is a direct current charging station, and opening of the second inner cover is controlled according to the fourth control signal.

In some embodiments, that a type of the charging station is obtained includes:
the type of the charging station is obtained based on the vehicle environment information; and/or
the type of the charging station is obtained based on charging connector information.

In some embodiments, the charging connector information includes structure information of the charging connector and/or material information of the charging connector.

In some embodiments, the control method further includes:
a closing signal is generated under the condition that the vehicle environment information suggests that charging is completed; and
according to the closing signal, the charging port cover is controlled to be closed.

According to a second aspect of the present disclosure, a control system for a vehicle charging port cover is provided, and is configured to perform the foregoing control method. The control system for a vehicle charging port cover includes: an in-vehicle image device, configured to obtain vehicle environment information;
a processor, configured to: generate a control signal under the condition that the vehicle environment information suggests that a user has a charging intention; and according to the control signal, control the charging port cover to be opened; and
an execution apparatus, configured to open the charging port cover.

In some embodiments, an in-vehicle radar is further included, and the in-vehicle radar is configured to obtain a distance from a charging connector to the charging port cover; and
the processor charging port generates the control signal under the condition that the distance is less than or equal to a predetermined value.

In some embodiments, the charging port cover includes a first inner cover configured to cover an alternating current charging port and a second inner cover configured to cover a direct current charging port, and the control signal includes a third control signal and a fourth control signal;
the control system further includes a material sensing apparatus, and the material sensing apparatus is configured to sense material information of a charging connector; and
the processor is further configured to: generate the third control signal or the fourth control signal according to the material information, control opening of the first inner cover according to the third control signal, and control opening of the second inner cover according to the fourth control signal.

According to a third aspect of the present disclosure, a vehicle is provided, and the vehicle includes the foregoing control system for a vehicle charging port cover.

According to a fourth aspect of the present disclosure, an electronic device is provided. The electronic device includes: a memory, configured to store an executable computer instruction; and a processor, configured to perform the foregoing control method under the control of the executable computer instruction.

According to a fifth aspect of the present disclosure, a computer-readable storage medium is provided, and the foregoing control method is performed when a computer instruction is run by a processor.

The inventor of the present disclosure finds that in the related art, a vehicle charging port cover is automatically opened when a person has no charging intention. Therefore, a technical task to be implemented or a technical problem to be resolved in the present disclosure is never figured by or expected by a person skilled in the art. Therefore, the present disclosure is a new technical solution.

Other features and advantages of the present disclosure will become apparent from the following detailed description of example embodiments of the present disclosure with reference to the accompanying drawings.

### BRIEF DESCRIPTION OF THE DRAWINGS

Accompanying drawings that are incorporated into and constitute a part of the present specification show embodiments that conform to the present disclosure, and are used together with the present specification to describe the principle of the present disclosure.
FIG. 1 is a first flowchart of steps of a control method for a vehicle charging port cover according to an embodiment of the present disclosure;
FIG. 2 is a second flowchart of steps of a control method for a vehicle charging port cover according to an embodiment of the present disclosure;
FIG. 3 is a third flowchart of steps of a control method for a vehicle charging port cover according to an embodiment of the present disclosure;
FIG. 4 is a fourth flowchart of steps of a control method for a vehicle charging port cover according to an embodiment of the present disclosure;
FIG. 5 is a fifth flowchart of steps of a control method for a vehicle charging port cover according to an embodiment of the present disclosure;
FIG. 6 is a sixth flowchart of steps of a control method for a vehicle charging port cover according to an embodiment of the present disclosure;
FIG. 7 is a schematic diagram of a structure of a charging apparatus of a vehicle according to an embodiment of the present disclosure; and
FIG. 8 is a schematic diagram of an electronic device according to an embodiment of the present disclosure.

In the drawings:
100. Outer cover; 220. First inner cover; 210. Second inner cover; 310. Direct current charging port; 320. Alternating current charging port; 400. Electronic device; 401. Processor; 402. Memory.

### DESCRIPTION OF EMBODIMENTS

Various example embodiments of the present disclosure are now described in detail with reference to the accompanying drawings. It should be noted that, unless otherwise specified, opposite arrangement, numerical expressions, and numerical values of components and steps described in the embodiments do not limit the scope of the present disclosure.

The following descriptions of at least one example embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely examples and not as limitations. Therefore, other examples of example embodiments may have different values.

It should be noted that, similar labels and letters represent similar items in the following accompanying drawings. Therefore, once an item is defined in one accompanying drawing, the item does not need to be further discussed in subsequent accompanying drawings.

### <Control method for a vehicle charging port cover>

In an embodiment of the present disclosure, a control method for a vehicle charging port cover is provided. This method may be performed by a processor. The charging port cover includes an inner cover and an outer cover located on the outer side of the inner cover. An outer cover 100 is connected to a vehicle body. The outer cover 100 is located on the outer side of the inner cover, and the outer cover 100 covers the inner cover. The inner cover is located between a charging port and the outer cover 100.

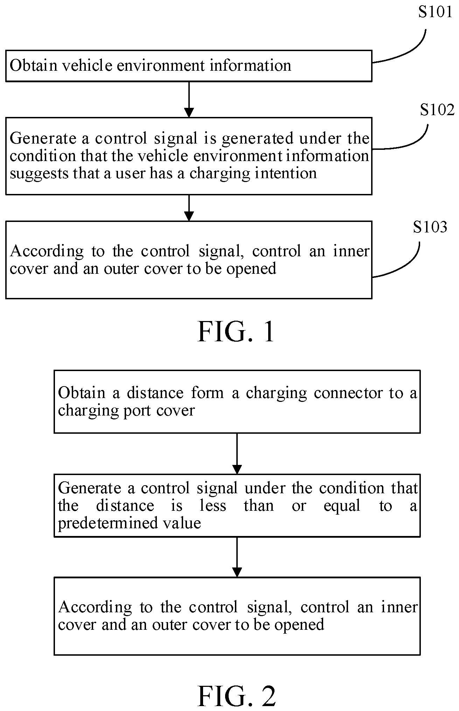

FIG. 1 is a first flowchart of steps of a control method for a vehicle charging port cover according to an embodiment of the present disclosure.

As shown in FIG. 1, the control method for a vehicle charging port cover includes the following steps.

In S101, vehicle environment information is obtained.

In S102, a control signal is generated under the condition that the vehicle environment information suggests that a user has a charging intention.

In S103, according to the control signal, an inner cover and an outer cover are controlled to be opened.

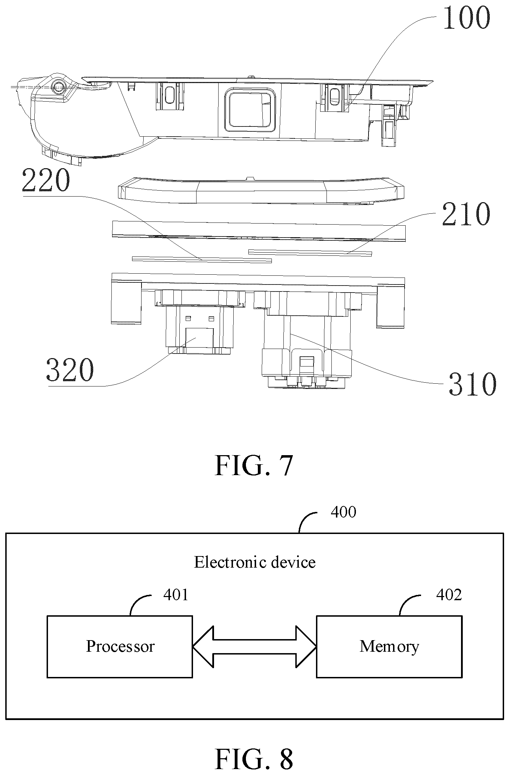

For example, as shown in FIG. 1 and FIG. 7, a processor obtains the vehicle environment information vehicle environment information. The processor generates the control signal under the condition that the processor represents the obtained vehicle environment information as that the user has the charging intention. The charging intention is a determining result, obtained by the processor after analyzing the vehicle environment information, of whether a person requires charging. The processor may determine that the vehicle environment information suggests that the person has the charging intention when the vehicle environment information suggests that the person is approaching a charging station. The processor may alternatively determine that the vehicle environment information suggests that the person has the charging intention when the vehicle environment information suggests that the person takes off a charging connector on a charging station. The processor may alternatively determine that the vehicle environment information suggests that the person has the charging intention when the vehicle environment information suggests that a distance between a charging connector and an in-vehicle charging port is within a range of preset values. In this way, the vehicle can automatically recognize whether the person is to charge the vehicle, to automatically control opening of the inner cover and the outer cover, thereby improving intelligence of the vehicle and reducing troubles caused by a manual operation.

In an example, the vehicle environment information includes view information within a set distance range from the vehicle. The view information is video and image information.

The processor obtains image information of an environment in which the vehicle is located. For example, the processor is preset to be capable of obtaining image information of an environment centered on a location of the vehicle with a radius being 20 meters.

**In** an example, that a control signal is generated under the condition that the vehicle environment information suggests that a user has a charging intention includes: the vehicle environment information includes a charging station.

For example, a type, a structure, and a profile feature of the charging station are pre-stored in the processor. After analyzing the obtained image information of the environment centered on the location of the vehicle with the radius being 20 meters, the processor determines, after identifying that the vehicle environment information includes the charging station, that the vehicle environment information suggests that the person has the charging intention. The processor generates the control signal.

In some embodiments, that a control signal is generated under the condition that the vehicle environment information suggests that a user has a charging intention further includes:
a distance between the charging station and the vehicle is less than or equal to a threshold.

For example, if the distance between the charging station and the vehicle is set, in the processor, to be in a range less than or equal to 15 meters, the processor generates the control signal for controlling opening of the inner cover and the outer cover.

Alternatively, that a control signal is generated under the condition that the vehicle environment information suggests that a user has a charging intention further includes: a person is holding a charging connector.

For example, after analyzing the obtained image information of the environment centered on the location of the vehicle with the radius being 20 meters, the processor generates the control signal after identifying that information indicating that the person is holding the charging connector is obtained from the vehicle environment information.

In some embodiments, that a control signal is generated under the condition that the vehicle environment information suggests that a user has a charging intention further includes:
a person walks toward a charging station and takes off a charging connector.

For example, after analyzing the obtained image information of the environment centered on the location of the vehicle with the radius being 20 meters, the processor generates the control signal after identifying that the person walks toward the charging station and takes off the charging connector.

The processor generates the control signal when the vehicle environment information suggests that the person has the charging intention. The processor generates a control signal for opening the charging port cover, and the charging port cover is opened.
further includes the following steps: A battery level of the vehicle is obtained, and the charging port cover is controlled to be opened if it is determined based on the vehicle environment information that the user has the charging intention, the vehicle environment information includes the charging station, or other determining conditions described above when the battery level of the vehicle is less than a preset threshold.

In this manner, the vehicle in the present disclosure can execute, based on whether the person has the charging intention, an instruction of whether to open the charging port cover. In this way, a case in which the vehicle mistakenly opens the charging port cover when the person has no charging intention is avoided, and opening of the charging port cover of the vehicle can be further intelligently controlled. This significantly facilitates the user and improves use experience for the vehicle.

In an embodiment of the present disclosure, that a control signal is generated under the condition that the vehicle environment information suggests that a user has a charging intention further includes the following steps:

A distance from the charging connector to the charging port cover is obtained.

The control signal is generated under the condition that the distance is less than or equal to a predetermined value.

As shown in FIG. 2 and FIG. 7, in step S102, the control method further includes the following step: The processor determines the charging intention of the person by using the distance from the charging connector to the charging port cover. The processor obtains the distance from the charging connector to the charging port cover. When the distance from the charging connector to the charging port cover is less than or equal to a predetermined value that is set in advance, the processor generates the control signal for opening the charging port cover, and the charging port cover is opened.

In an example, the predetermined value is a straight line distance from the charging connector to the charging port cover. For example, the straight line distance is 30 centimeters. When the processor learns that the distance from the charging connector to the charging port cover is equal to 30 centimeters, or when the processor learns that the distance from the charging connector to the charging port cover is less than 30 centimeters, the processor generates the control signal for opening the charging port cover, and the charging port cover is opened.

In this manner, the charging intention of the person is determined by using the distance between the charging connector and the charging port cover, so that the charging intention of the person is determined more accurately.

In an embodiment of the present disclosure, the predetermined value includes a first predetermined value, and the control signal includes a first control signal.

The first control signal is generated under the condition that the distance is less than or equal to the first predetermined value, and opening of the outer cover 100 is controlled according to the first control signal.

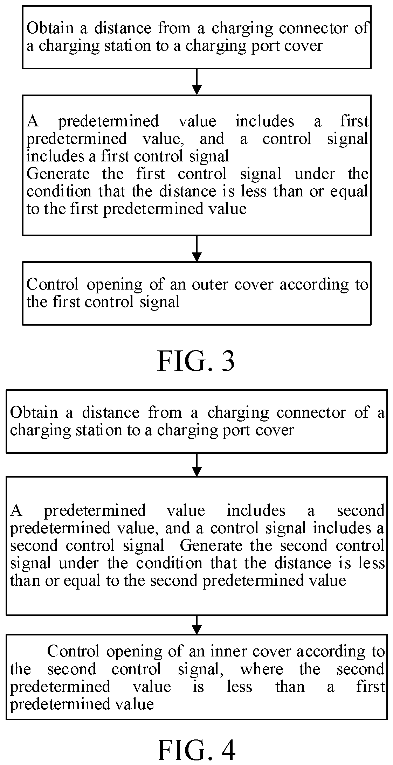

For example, as shown in FIG. 3 and FIG. 7, the outer cover 100 is connected to a vehicle body. The outer cover 100 is located on the outer side of the inner cover, and the outer cover 100 covers the inner cover. The inner cover is located between a charging port and the outer cover 100. The predetermined value includes the first predetermined value. When a distance between the charging connector and the outer cover 100 that is obtained by the processor is less than or equal to the first predetermined value, the processor generates the first control signal for opening the outer cover 100. If the distance between the charging connector and the outer cover 100 that is obtained by the processor is not less than or equal to the first predetermined value, the processor does not generate a control signal for opening the outer cover 100.

In an example, the first predetermined value is 25 centimeters. When the distance from the charging connector to the outer cover 100 that is obtained by the processor is 25 centimeters, or when the distance from the charging connector to the outer cover 100 that is obtained by the processor is less than 25 centimeters, the processor generates the first control signal for opening the outer cover 100, and the outer cover 100 is opened.

In this way, accuracy of opening the charging port cover based on the charging intention of the person is improved.

In an embodiment of the present disclosure, the predetermined value includes a second predetermined value, and the control signal includes a second control signal. The second control signal is generated under the condition that the distance is less than or equal to the second predetermined value, and opening of the inner cover is controlled according to the second control signal. The second predetermined value is less than the first predetermined value.

For example, as shown in FIG. 4, the predetermined value further includes the second predetermined value. The processor determines whether a distance from the charging connector to the inner cover is less than or equal to the second predetermined value. If yes, the processor generates the second control signal, and the inner cover is opened.

In an example, the second predetermined value is 15 centimeters. When a distance from the charging connector to the inner cover that is obtained by the processor is 15 centimeters, or when the distance from the charging connector to the inner cover that is obtained by the processor is less than 15 centimeters, an execution apparatus opens the inner cover.

In an example, the first predetermined value is 30 centimeters, and the second predetermined value is 20 centimeters. When the distance from the charging connector to the outer cover 100 that is obtained by the processor is 30 centimeters, or when the distance from the charging connector to the outer cover 100 that is obtained by the processor is less than 30 centimeters, the processor generates the first control signal, and the outer cover 100 is opened. After the outer cover 100 is opened, when the distance from the charging connector to the inner cover that is obtained by the processor is 20 centimeters, or when the distance from the charging connector to the inner cover that is obtained by the processor is less than 20 centimeters, the processor generates the second control signal, and the inner cover is opened.

In this manner, a charging port cover of a corresponding charging port can be opened based on a charging manner selected by the person, so that user experience can be improved.

In an embodiment of the present disclosure, the predetermined value includes a third predetermined value, and the third predetermined value is less than the second predetermined value. The control signal includes a fifth control signal. The fifth control signal is generated under the condition that the distance is less than or equal to the third predetermined value. The inner cover and the outer cover 100 are controlled, based on the fifth control signal, to be opened.

For example, when the processor learns that the distance from the charging connector to the outer cover 100 is less than or equal to a third threshold, the processor generates the fifth control signal and controls to open the outer cover 100 and the inner cover. The processor may control to open the outer cover 100 first before opening the inner cover. Alternatively, the processor controls to open the inner cover first before opening the outer cover 100. Alternatively, the processor controls to open the outer cover 100 and the inner cover simultaneously.

In an example, the third predetermined value is 5 centimeters. When the processor learns that the distance from the charging connector to the outer cover 100 is less than or equal to 5 centimeters, the processor generates the fifth control signal and controls to open the outer cover 100 and the inner cover. For example, when the processor learns that the distance from the charging connector to the outer cover 100 is less than or equal to 5 centimeters, the processor controls to open the outer cover 100 and the inner cover simultaneously.

In another example, the third predetermined value may be greater than the second predetermined value or equal to the second predetermined value. A person skilled in the art may set the third predetermined value based on an actual requirement.

In an embodiment of the present disclosure, the inner cover includes a first inner cover 220 configured to cover an alternating current charging port 320 and a second inner cover 210 configured to cover a direct current charging port 310, the control signal includes a third control signal and a fourth control signal, and the control method includes the following steps:

A type of a charging station is obtained.

The third control signal is generated under the condition that the type of the charging station is an alternating current charging station, and opening of the first inner cover 220 is controlled according to the third control signal.

The fourth control signal is generated under the condition that the type of the charging station is a direct current charging station, and opening of the second inner cover 210 is controlled according to the fourth control signal.

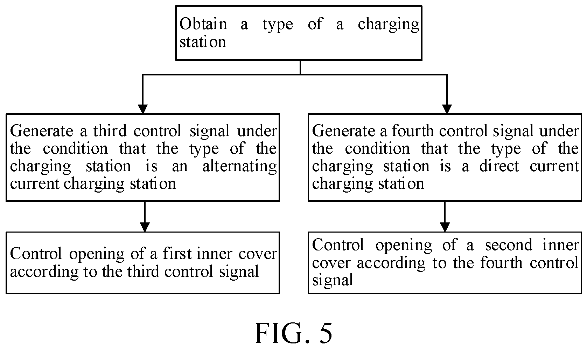

As shown in FIG. 5, the control signal further includes a third control signal used for opening the first inner cover 220 and a fourth control signal used for opening the second inner cover 210. The charging port includes an alternating current charging port 320 and a direct current charging port 310. The first inner cover 220 is configured to cover the alternating current charging port 320, and the second inner cover 210 is configured to cover the direct current charging port 310. Types of the charging station include a direct current charging station and an alternating current charging station. The charging station includes a charging station body, a charging connector, and a charging wire that connects the charging connector to the charging station body. The direct current charging station is equipped with a direct current charging connector, and the alternating current charging station is equipped with an alternating current charging connector. The direct current charging connector matches the direct current charging port 310, and the alternating current charging connector matches the alternating current charging port 320.

The processor obtains the type of the charging station. The processor obtains the vehicle environment information. For example, vehicle environment information of the charging station body, the charging connector, and the charging wire is obtained. The processor compares the obtained vehicle environment information with pre-stored charging station information, to determine the type of the charging station.

In an example, the processor obtains information about an environment in which the charging station is located, and the processor compares a structure and a size of the charging station and a thickness of the charging wire with the pre-stored information based on the collected vehicle environment information, to determine whether the charging station is a direct current charging station or an alternating current charging station. The processor generates the fourth control signal when determining that the charging station is a direct current charging station, and the second inner cover 210 is opened. The processor generates the third control signal when determining that the charging station is an alternating current charging station, and the first inner cover 220 is opened.

In this manner, whether to open the second inner cover 210 of the direct current charging port 310 or the first inner cover 220 of the alternating current charging port 320 can be determined based on the type of the charging station or a type of the charging connector. In this way, the charging intention of the person and a charging manner of the person can be actively identified, to open a corresponding charging port cover. In this way, use experience of the person can be improved. In an embodiment of the present disclosure, that the type of the charging station is obtained includes the following:
the type of the charging station is obtained based on the vehicle environment information; and/or
the type of the charging station is obtained based on charging connector information;
the type of the charging station may be obtained based on the vehicle environment information; or charging connector information is obtained, and the type of the charging station is obtained based on the charging connector information; or the type of the charging station is identified based on the vehicle environment information, and the charging connector information is also obtained, so that the type of the charging station is identified based on the charging connector information. Types of the charging connector include a direct current charging connector and an alternating current charging connector.

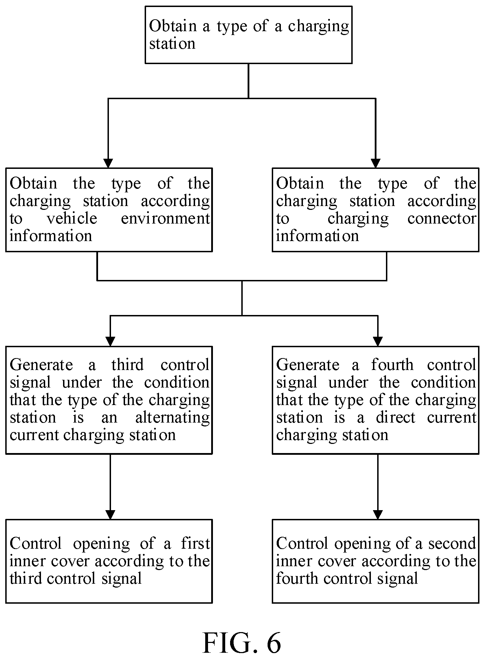

In an example, as shown in FIG. 6, an in-vehicle image device captures an image of a charging connector held by a person, and the processor determines the type of the charging connector based on the captured image of the charging connector. Therefore, a corresponding inner cover is opened based on the type of the charging connector. The second inner cover 210 is opened when the charging connector is a direct current charging connector. The first inner cover 220 is opened when the charging connector is an alternating current charging connector.

In this manner, the type of the charging connector can be determined based on a feature of a charging connector selected by the person, to open a charging port cover of a corresponding charging port, so that use experience of the person can be improved.

In an embodiment of the present disclosure, the charging connector information includes structure information of the charging connector and/or material information of the charging connector.

The structure information of the charging connector is the number of electrically connected terminals of the charging connector, an arrangement manner of the electrically connected terminals, and the like. For example, the direct current charging connector has nine electrically connected terminals, and the alternating current charging connector has seven electrically connected terminals.

In an example, the processor determines the number of connected terminals of the charging connector based on the captured image of the charging connector. Therefore, the type of the charging connector is determined. Therefore, a corresponding inner cover is opened based on the type of the charging connector. The second inner cover 210 is opened when the charging connector is a direct current charging connector. The first inner cover 220 is opened when the charging connector is an alternating current charging connector.

It may be understood that the processor may alternatively determine the type of the charging connector based on another differential feature of the direct current charging connector and the alternating current charging connector. A person skilled in the art may select the charging connector based on an actual requirement.

In an example, copper content of the direct current charging connector is greater than copper content of the alternating current charging connector. The processor identifies the type of the charging connector based on the copper content of the charging connector. For example, the copper content of the direct current charging connector ranges from 10% to 15%, and the copper content of the alternating current charging connector ranges from 3% to 6%. If the copper content of the charging connector is 12%, the processor determines that the charging connector is a direct current charging connector. If the copper content of the charging connector is 5%, the processor determines that the charging connector is an alternating current charging connector.

In this way, a type of a charging port cover to be opened is controlled based on the copper content of the charging connector, so that accuracy of identifying the type of the charging connector can be improved, and use experience of the person can be further improved.

In an embodiment of the present disclosure, a closing signal is generated under the condition that the vehicle environment information suggests that charging is completed, and the charging port cover is controlled, based on the closing signal, to be closed.

The processor obtains the vehicle environment information. When the vehicle environment information suggests that the person inserts the charging connector into a charging station body, the processor determines that the vehicle environment information suggests that charging is completed. The processor generates a closing instruction for closing the charging port cover, and the charging port cover is closed.

In this way, when charging ends, the charging port cover can be automatically closed, thereby further improving use experience of the person.

### <Control system for a vehicle charging port cover>

In another embodiment of the present disclosure, a control system for a vehicle charging port cover is further provided, and the control system includes an in-vehicle image device, a processor, and an execution apparatus. The control system is configured to perform the foregoing control method. The in-vehicle image device is configured to obtain vehicle environment information. The processor is configured to: generate a control signal under the condition that the vehicle environment information suggests that a user has a charging intention; and according to the control signal, control the charging port cover to be opened. For example, the processor is configured to: obtain the vehicle environment information, and generate the control signal under the condition that the vehicle environment information suggest that the user has the charging intention. According to the control signal, the processor controls the charging port cover to be opened. The execution apparatus is configured to open the charging port cover. For example, the execution apparatus includes a motor and a drive module. The drive module is connected to the charging port cover. The motor drives the drive module to move, to open or close the charging port cover.

For example, the vehicle environment information includes: whether a charging station disposed in an environment in which the vehicle is located. Alternatively, after a charging station is identified in an environment in which the vehicle is located, whether a distance between the charging station and the vehicle is less than or equal to a threshold is further identified. If the distance between the charging station and the vehicle is within a set threshold range, it is determined that the person has the charging intention. Alternatively, after a charging station is identified in an environment in which the vehicle is located, whether a distance between the charging station and the vehicle is less than or equal to a threshold is further identified. If the distance between the charging station and the vehicle is within a set threshold range, whether the person is holding a charging connector is identified, and if the person is holding a charging connector, it is determined that the person has the charging intention. Alternatively, after a charging station is identified in an environment in which the vehicle is located, and it is identified that the person walks toward the charging station and takes off a charging connector, it is determined that the person has the charging intention. The in-vehicle image device may be an image device of a vehicle intelligent driving module. The intelligent driving module is a module that can enable a machine to assist the person in driving and completely replaces the person to drive in a special case, or may be another in-vehicle image device, provided that the vehicle environment information can be captured.

For example, the processor is configured to: process the vehicle environment information collected by the in-vehicle image device, and determine, based on an image signal, whether the person has the charging intention.

In this way, the charging intention of the person can be identified, and the charging port cover is opened when the person has the charging intention.

In an example, after the person opens a door of the vehicle, the in-vehicle image device starts and captures an image of an environment around a vehicle body. After capturing the image of the environment around the vehicle body, the processor identifies vehicle environment information. The vehicle environment information is analyzed. If the processor identifies that the person walks toward the charging station, or if the processor identifies that the person pulls out a charging connector on the charging station, the processor determines that the person has the charging intention.

In an example, it is determined, through analysis of the vehicle environment information collected by the in-vehicle image device, that the person pulls out the charging connector. In this case, the processor determines that the person has the charging intention. It is determined, through analysis of the vehicle environment information collected by the in-vehicle image device, that the person does not pull out the charging connector. In this case, the processor determines that the person has no charging intention. The execution apparatus opens the charging port cover when it is determined that the person has the charging intention. The execution apparatus closes the charging port cover when the processor determines that the person pulls the charging connector out of the charging port.

In an example, the in-vehicle image device captures an image of a charging connector held by the person, and the processor determines a type of the charging connector based on the captured image of the charging connector. Therefore, a corresponding inner cover is opened based on the type of the charging connector. A second inner cover 210 is opened when the charging connector is a direct current charging connector. A first inner cover 220 is opened when the charging connector is an alternating current charging connector.

In this way, accuracy of identifying the charging intention of the person can be improved.

After the person opens the door of the vehicle, the in-vehicle image device starts and captures an image of an environment around a vehicle body. After capturing the image of the environment around the vehicle body, if the processor does not identify the vehicle environment information, or if the processor does not recognize that the person walks towards the charging station, or the processor recognizes that the person walks toward the charging station, but the person does not pull up the charging connector, the processor determines that the person has no charging intention.

In an embodiment of the present disclosure, an in-vehicle radar is further included. The in-vehicle radar is configured to obtain a distance from the charging connector to the charging port cover.

The processor generates a control signal under the condition that the distance from the charging connector to the charging port cover is less than or equal to a predetermined value.

For example, the in-vehicle radar is configured to detect the distance from the charging connector to the charging port cover, which includes: detecting a distance from the charging connector to an outer cover 100 and a distance from the charging connector to the inner cover. For example, the in-vehicle radar may be a millimeter wave radar, a laser radar, an ultrasonic radar, or an infrared sensor radar.

For example, the predetermined value includes a first predetermined value, and the first predetermined value is the distance from the charging connector to the outer cover 100. The predetermined value further includes a second predetermined value, and the second predetermined value is the distance from the charging connector to the inner cover. The outer cover 100 is opened when the distance from the charging connector to the outer cover 100 falls within a range of the first predetermined value. The inner cover is opened when the distance from the charging connector to the inner cover falls within a range of the second predetermined value.

It may be understood that the in-vehicle radar is disposed at a location at which a distance from the charging connector to the charging port cover can be detected, and a person skilled in the art may set the location of the in-vehicle radar based on a type of the in-vehicle radar.

For example, the in-vehicle image device captures an image of the vehicle environment information, for example, captures an image of a charging station body, the charging connector, and a charging wire. The processor compares the vehicle environment information collected by the in-vehicle image device with comparison information, to determine a type of the charging station. The comparison information is direct current charging station information and alternating current charging station information. The comparison information may be obtained in real time by the processor, or may be information pre-stored in the processor.

In an example, the in-vehicle image device captures an image of a charging station, and the processor compares a structure and a size of the charging station and a thickness of a charging wire with pre-stored information based on the collected vehicle environment information, to determine whether the charging station is a direct current charging station or an alternating current charging station. A second inner cover 210 closing a direct current charging port 310 is opened when it is determined that the charging station is a direct current charging station. A first inner cover 220 closing an alternating current charging port 320 is opened when it is determined that the charging station is an alternating current charging station.

In this way, whether to open the charging port cover can be determined by using a distance between the charging connector and the charging port cover, so that the charging intention of the person can be more accurately determined.

In an embodiment of the present disclosure, the charging port cover includes a first inner cover 220 configured to cover an alternating current charging port 320 and a second inner cover 210 configured to cover a direct current charging port 310, and the control signal includes a third control signal and a fourth control signal.

The control system further includes a material sensing apparatus, and the material sensing apparatus is configured to sense material information of the charging connector.

The processor is further configured to: generate the third control signal or the fourth control signal according to the material information, control opening of the first inner cover 220 according to the third control signal, and control opening of the second inner cover 210 according to the fourth control signal.

For example, the material sensing apparatus is a metal spectrum analyzer. The material sensing apparatus detects copper content of the charging connector, to determine the type of the charging connector. The processor generates the second control signal and the third control signal based on the type of the charging connector. The second control signal is used to open the first inner cover 220, and the third control signal is used to open the second inner cover 210.

For example, the copper content of the direct current charging connector ranges from 10% to 15%, and the copper content of the alternating current charging connector ranges from 3% to 6%. If the material sensing apparatus detects that the copper content of the charging connector is 12%, the processor determines that the charging connector is a direct current charging connector, the processor generates the third control signal, the execution apparatus obtains the third control signal, and the execution apparatus opens the second inner cover 210. If the copper content of the charging connector that is detected by the material detection apparatus is 5%, the processor determines that the charging connector is an alternating current charging connector, the processor generates the second control signal, the execution apparatus obtains the second control signal, and the execution apparatus opens the second inner cover 210.

In this manner, a corresponding charging port cover can be opened based on a type of charging selected by the person, thereby improving use experience of the person.

### <Vehicle>

According to another aspect of the present disclosure, a vehicle is further provided. The vehicle includes the foregoing control system for a vehicle charging port cover.

In this manner, the vehicle in the present disclosure can automatically open or not open the charging port cover based on a charging intention of a person.

### <Electronic device>

According to another aspect of the present disclosure, an electronic device 400 is further provided. As shown in FIG. 8, the electronic device includes: a memory 402, configured to store an executable computer instruction; and

a processor 401, configured to perform the foregoing control method under the control of the executable computer instruction.

### <Computer-readable storage medium>

According to another embodiment of the present disclosure, a computer-readable storage medium is provided. The computer-readable storage medium stores a computer instruction, and the control method according to the first aspect is performed when the computer program is run by a processor.

The computer-readable storage medium may be a tangible device that can maintain and store an instruction used by an instruction execution device. The computer-readable storage medium may be, for example, but is not limited to, an electric storage device, a magnetic storage device, an optical storage device, an electromagnetic storage device, a semi-conductive storage device, or any proper combination of the above. More specific examples (a non-exhaustive list) of computer-readable storage mediums include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disc (DVD), a memory stick, a floppy disk, a mechanical coding device, a protrusion structure in a puncturing card or a groove that, for example, stores an instruction, or any proper combination of the above. The computer-readable storage medium used herein is not interpreted as an instantaneous signal itself, such as a radio wave or another freely propagating electromagnetic wave, an electromagnetic wave propagated by a waveguide or another transmission medium (for example, an optical pulse transmitted by an optical fiber cable), or an electrical signal transmitted by a wire.

The computer-readable program instruction described herein may be downloaded from the computer-readable storage medium to various computing/processing devices, or downloaded to an external computer or an external storage device through a network, such as the Internet, a local area network, a wide area network, and/or a wireless network. The network may include a copper transmission cable, optical fiber transmission, wireless transmission, a router, a firewall, a switch, a gateway computer, and/or an edge server. A network adapter or a network interface in each computing/processing device receives the computer-readable program instruction from the network, and forwards the computer-readable program instruction, so that the computer-readable program instruction is stored in a computer-readable storage medium in each computing/processing device.

The computer program instruction used to perform operations in the present disclosure may be an assembly instruction, an instruction set architecture (ISA) instruction, a machine instruction, a machine-related instruction, microcode, a firmware instruction, status setting data, or source code or target code written in one programming language or any combination of more programming languages. The programming languages include an object-oriented programming language such as Smalltalk or C++, and a conventional procedural programming language such as "C" language or a similar programming language. The computer-readable program instruction may be completely executed on a personal computer, partially executed on a personal computer, executed as an independent software package, partially executed on a personal computer and partially executed on a remote computer, or completely executed on a remote computer or a server. For the case involving a remote computer, the remote computer may be connected to a personal computer through any type of network including a local area network (LAN) or a wide area network (WAN), or may be connected to an external computer (for example, through the Internet by using an Internet service provider). In some embodiments, an electronic circuit, such as a programmable logic circuit, a field programmable gate array (FPGA), or a programmable logic array (PLA), may be personalized by using status information of the computer-readable program instruction, and the electronic circuit may execute the computer-readable program instruction, to implement aspects of the present disclosure.

The aspects of the present disclosure are described herein with reference to the flowcharts and/or block diagrams of the method, the apparatus (system), and the computer program product according to the embodiments of the present disclosure. It is to be understood that each block in the flowcharts and/or block diagrams and combinations of blocks in the flowcharts and/or block diagrams can be implemented by the computer-readable program instruction.

These computer program instructions can be provided to a processor of a general-purpose computer, a special-purpose computer, or another programmable data processing apparatus, to generate a machine, such that the instructions, which being executed via the processor of the computer or the another programmable data processing apparatus, create an apparatus for implementing the functions/actions specified in one or more blocks in the flowcharts and/or block diagrams. Alternatively, the computer-readable program instructions may be stored in the computer-readable storage medium. The instructions enable a computer, a programmable data processing apparatus, and/or another device to work in a specific manner. Therefore, a computer-readable medium that stores the instruction includes a manufacturer that includes instructions for implementing aspects of functions/actions specified in one or more blocks in the flowcharts and/or block diagrams.

Alternatively, the computer-readable program instructions may be loaded onto a computer, another programmable data processing apparatus, or another device to cause a series of operational steps to be performed on the computer, the another programmable data processing apparatus, or the another device to produce a computer implemented process such that the instructions that are executed on the computer, the another programmable data processing apparatus, or the another device implement the functions/actions specified in one or more blocks in the flowcharts and/or block diagrams.

The flowcharts and block diagrams in the accompanying drawings illustrate the architecture, functionality, and operation of possible implementations of the system, the method, and the computer program product according to multiple embodiments of the present disclosure. In this regard, each block in the flowchart or the block diagram may represent a module, a program segment, or a part of an instruction. The module, the program segment, or the part of the instruction includes one or more executable instructions used for implementing designated logic functions. In some implementations used as substitutes, functions annotated in blocks may alternatively occur in a sequence different from that annotated in the accompanying drawings. For example, actually two successive blocks may be performed basically in parallel, and sometimes the two blocks may be performed in a reverse sequence. This is determined by a related function. It should also be noted that, each block in the block diagram and/or the flowchart and a combination of blocks in the block diagram and/or the flowchart may be implemented by using a dedicated hardware-based system configured to perform a specified function or operation, or may be implemented by using a combination of dedicated hardware and a computer instruction. It is well-known to a person skilled in the art that implementation in a hardware manner, implementation in a software manner, and implementation in a combination of software and hardware are equivalent.

The embodiments of the present disclosure have been described above. The foregoing descriptions are examples but not exhaustive, and are not limited to the disclosed embodiments. Many modifications and changes are apparent to a person of ordinary skill in the art without departing from the scope and spirit of the described embodiments. The terminology used in this specification is intended to best explain the principles, practical applications, or technical improvements in the market of the embodiments, or to enable others of ordinary skill in the art to understand the embodiments disclosed herein. The scope of the present disclosure is defined by the appended claims.

## Claims

1. A control method for a vehicle charging port cover, the charging port cover comprising an inner cover and an outer cover located on an outer side of the inner cover, and the control method comprising:
obtaining vehicle environment information;
generating a control signal under the condition that the vehicle environment information suggests that a user has a charging intention; and
according to the control signal, controlling the inner cover and the outer cover to be opened.

2. The control method according to claim 1, wherein the vehicle environment information comprises view information within a set distance range from a vehicle.

3. The control method according to claim 1, wherein generating a control signal under the condition that the vehicle environment information suggests that a user has a charging intention comprises:
the vehicle environment information comprises a charging station.

4. The control method according to claim 3, wherein generating a control signal under the condition that the vehicle environment information suggests that a user has a charging intention further comprises:
a distance between the charging station and a vehicle is less than or equal to a threshold.

5. The control method according to claim 3, wherein generating a control signal under the condition that the vehicle environment information suggests that a user has a charging intention further comprises:
a person holding a charging connector.

6. The control method according to claim 1, wherein generating a control signal under the condition that the vehicle environment information suggests that a user has a charging intention further comprises:
a person walks toward a charging station and takes off a charging connector.

7. The control method according to any one of claims 3 to 6, wherein generating a control signal under the condition that the vehicle environment information suggests that a user has a charging intention comprises:
obtaining a distance from the charging connector to the charging port cover; and
generating the control signal under the condition that the distance is less than or equal to a predetermined value.

8. The control method according to claim 7, wherein the predetermined value comprises a first predetermined value, and the control signal comprises a first control signal; and
generating the first control signal under the condition that the distance is less than or equal to the first predetermined value, and controlling opening of the outer cover according to the first control signal.

9. The control method according to claim 8, wherein the predetermined value comprises a second predetermined value, the control signal comprises a second control signal, the second control signal is generated under the condition that the distance is less than or equal to the second predetermined value, and opening of the inner cover is controlled according to the second control signal, wherein the second predetermined value is less than the first predetermined value.

10. The control method according to claim 1, wherein the inner cover comprises a first inner cover configured to cover an alternating current charging port and a second inner cover configured to cover a direct current charging port, the control signal comprises a third control signal and a fourth control signal, and the control method comprises:
obtaining a type of a charging station;
generating the third control signal under the condition that the type of the charging station is an alternating current charging station, and controlling opening of the first inner cover according to the third control signal; and
generating the fourth control signal under the condition that the type of the charging station is a direct current charging station, and controlling opening of the second inner cover according to the fourth control signal.

11. The control method according to claim 10, wherein obtaining a type of the charging station comprises:
obtaining the type of the charging station based on the vehicle environment information; or
obtaining the type of the charging station based on charging connector information; or
obtaining the type of the charging station based on the vehicle environment information and obtaining the type of the charging station based on charging connector information.

12. The control method according to claim 11, wherein the charging connector information comprises structure information of a charging connector; or
the charging connector information comprises: material information of the charging connector; or
the charging connector information comprises: structural information of the charging connector and material information of the charging connector.

13. The control method according to claim 1, further comprising:
generating a closing signal under the condition that the vehicle environment information suggests that charging is completed; and
according to the closing signal, controlling the charging port cover to be closed.

14. A control system for a vehicle charging port cover, configured to perform the control method according to any one of claims 1 to 13, and comprising:
an in-vehicle image device, configured to obtain vehicle environment information;
a processor, configured to generate a control signal under the condition that the vehicle environment information suggests that a user has a charging intention; and according to the control signal, control the charging port cover to be opened; and
an execution apparatus, configured to open the charging port cover.

15. The control system for a vehicle charging port cover according to claim 14, further comprising an in-vehicle radar, the in-vehicle radar being configured to obtain a distance from a charging connector to the charging port cover; and
the processor generating the control signal under the condition that the distance is less than or equal to a predetermined value.

16. The control system for a vehicle charging port cover according to claim 14, wherein the charging port cover comprises a first inner cover configured to cover an alternating current charging port and a second inner cover configured to cover a direct current charging port, and the control signal comprises a third control signal and a fourth control signal;
the control system further comprises a material sensing apparatus, and the material sensing apparatus is configured to sense material information of a charging connector; and
the processor is further configured to generate the third control signal or the fourth control signal according to the material information, control opening of the first inner cover according to the third control signal, and control opening of the second inner cover according to the fourth control signal.

17. A vehicle, comprising the control system for a vehicle charging port cover according to any one of claims 14 to 16.
